# EUROPEAN PATENT APPLICATION

(11) **EP 3 118 178 A1**
(43) Date of publication of application: **18.01.2017**
(21) Application number: 14885184.3
(22) Date of filing: 10.04.2014
(51) Int. Cl.: C04B 41/46, C04B 16/02

(54) **DECORATIVE FACING COVERING MATERIAL**

(30) Priority: 14.03.2014 RU 2014109867
(71) Applicant: Arutjunov, Sergej Aleksandrovich, Moscow 107082 (RU); Fisun, Stanislav Vladimirovich, Moscow 107207 (RU)
(72) Inventor: Arutjunov, Sergej Aleksandrovich, Moscow 107082 (RU); Fisun, Stanislav Vladimirovich, Moscow 107207 (RU)
(74) Representative: Engel, Christoph Klaus
(86) International application number: PCT/RU2014/000266
(87) International publication number: WO 2015/137842

(57) **Abstract**

This invention relates to the art of construction, notably the decorative finishing materials for floor and ceiling coatings, mostly for interior finishing. The material of the decorative finishing coating is made as a dry mix and contains an organic filling, a water-bound vehicle and a powdered coloring matter. Wood flour is used as the organic filling. The fraction of the water-bound vehicle makes 3-40% of the wood flour. The invention permits to strengthen the coating.

## Description

### Art

This invention relates to the art of construction, notably the decorative finishing materials for floor and ceiling coatings, mostly for interior finishing.

### Prior art

The state of the art has a known material for decorative finishing coating made as a dry mix and containing an organic filler, carboxymethylcellulose and a powdered coloring matter (see patent RU 2330923, cl. E04F 13/00, published on 10.08.2008). The weakness of the known material is its relatively short life.

### SUMMARY OF THE INVENTION

The object of the invention is to remove the aforesaid disadvantage. The technical result consists in strengthening the coating. The designated task is solved, and the technical result is attained by using wood flour as an organic filling in the material of the decorative finishing coating made as a dry mix and containing an organic filling, a water-bound vehicle and a powdered coloring matter, where the fraction of the water-bound vehicle makes 3-40% of the wood flour. As a water-bound vehicle one can use carboxymethylcellulose, methylcelluloses, starch, modified starch, cellulose ester etc. The material may also contain cellulose, modifying additives, e.g. polyester fiber, shredded or sliced fiber, granulated plastic foam or foam polystyrene, surface-active materials, latices or silica chips, and also decorative additives, e.g. mica, glitters or flocks.

### Embodiment of the invention

The proposed material of the decorative finishing coating represents a prepacked dry mix which has to be dissolved with water and has to be applied to walls as decorative plaster. The main components of the mix are: an organic filling - wood flour (possibly combined with cellulose), water-bound vehicle (preferably carboxymethylcellulose (CB)) and a powdered coloring matter for coloring the mixture. The vehicle, being dissolved in water, makes a viscous solution which has enough adhesiveness to bind the coating with the majority of construction materials like: brick, plaster, concrete, chipboard, low density fiberboard etc. The higher is the solution's viscosity, the tighter is the coating's bond with the surface. For the binding agent can be used the following matters: methylcelluloses (MC); carboxymethylcelluloses (CMC), carbo-methyl starch (CMS) or hydroxypropyl starch (HOPC) which are, as a rule, united in a general group "Modified starch" (MS), each of which or their combination ensure the coating's bond with the surface.

The hardness of the mix itself will be comparable to the hardness of the species of wood which served as source to the wood flour. The fraction of the water-bound vehicle makes 3-40% of the wood flour. In case of adding less than 3% of the water-bound vehicle - the solution's viscosity is minimal and the adhesion disappears. In case of adding over 40% of the water-bound vehicle - the vehicle isn't completely dissolved in the mixture and many nondissolved clots appear in it.

When compared to the material where the basic filling is cellulose milled to wool, the proposed material's toughness and wear resistance will be higher with an equal binding agent (CMC), because the wood flour gives a higher toughness to the material (respectively, the material can be used in crowded areas), this also permits to reduce the package size, it is environmentally friendly (the wood flour goes through less chemical treatment than cellulose) and forms a more waterproof coating (the wood flour doesn't deteriorate under the influence of water, and thus, using certain species of wood seriously expands the field of use of the material, up to using it in some facade elements).

The finely powdered coloring matter serves to color the mixture, and also, due to its higher density compared to wood flour, ensures a small hardening of the formed coating. What's more, if one uses fine polymer colorings (like, for example, epoxypolyester), then, as they are mass-colored and have a high photostability, the general mixture will have a higher ultraviolet resistance.

To give special properties to the material, additional components are added to it, which can be divided into two groups - modifying additives and decorative additives. The additional components are added following a specific prepared formulation, and, respectively, either have a decorative function and ameliorate the visual perception, or elevate the mixture's characteristics to simplify the application, quicken the drying, ameliorate the adhesion, decrease the slugging, and also to form a tougher and more wear resistant coating after its drying.

The modifying additives can be the following:
- shredded or sliced fiber: serves as reinforcement of the product, the material becomes more abrasive resistant.
- granulated plastic foam or foam polystyrene: gives more warmth and acoustic isolation;
- surface-active materials (SAM): serve for wetting, diminishes the surface tension, diminishes the slugging, prevents the mixture from sticking to the instrument, thus facilitates its application;
- latices (dry powders): give more viscosity, adhesion, toughness;
- silica chips: boost material toughness as stone is tougher than wood. The modifying additives can be the following:
- mica: gives a decorative effect built on light reflection (shine);
- glitters: also give a decorative effect (shining dots);
- flocks (dried particles of colored paint): serve for ornamental purposes (dot coloring).

There are the following types of mixture provided as alternatives:

**Type #1**

| | |
|---|---|
| Coarse wood (birch) flour | 0,400 g. |
| Cellulose | 0,250 g. |
| Genapol | 0,020 g. |
| Latex | 0,040 g. |
| Mecellose PMC 50US - | 0,016 g. |
| Silica sand (coarse) brown | 0,200 g. |
| Gold dot | 0,010 g. |

**Type #2**

| | |
|---|---|
| Fine wood (spruce) flour | 0,400 g. |
| Cellulose | 0,250 g. |
| Genapol | 0,020 g. |
| Latex | 0,040 g. |
| Mecellose 23701 - | 0,007 g. |
| Uncoloured fiber th. 28,5 - | 0,268 g. |
| Pearly chips - | 0,080 g. |
| Amitrolit 8882 - | 0,005 g. |

**Type #3**

| | |
|---|---|
| Brown paint | 40 g. |
| Black fiber | 50 g. |
| White fiber | 50 g. |
| Coarse wood (spruce) flour | 500 g. |
| Fine wood (spruce) flour | 200 g. |
| CB | 167 g. |
| Latex | 30 g. |
| Genapol | 20 g. |

**Type #4**

| | |
|---|---|
| Coarse wood (spruce) flour | 400 g. |
| Cellulose | 400 g. |
| Genapol | 20 g. |
| Latex | 40 g. |
| CB | 167 g. |

**Type #5**

| | |
|---|---|
| Coarse wood (spruce) flour | 500 g. |
| Fine wood (spruce) flour | 200 g. |
| CB | 167 g. |
| Genapol | 20 g. |
| White fiber | 70 g. |
| Yellow paint | 40 g. |

**Type #6**

| | |
|---|---|
| Coarse wood (birch) flour | 400 g. |
| Genapol | 20 g. |
| Latex | 50 g. |
| CB | 150 g. |
| Cellulose | 400 g. |

**Type #7**

| | |
|---|---|
| Coarse wood (birch) flour | 350 g. |
| CB | 150 g. |
| Latex | 30 g. |
| Genapol | 20 g. |
| Fibrized fiber | 350 g. |
| White fiber | 90 g. |
| Gold dot | 10 g. |

**Type #8**

| | |
|---|---|
| Coarse wood (birch) flour | 400 g. |
| Cellulose | 250 g. |
| Genapol | 20 g. |
| CB | 150 g. |
| Latex | 40 g. |
| Vermiculite | 36 g. |

**Type #9**

| | |
|---|---|
| Coarse wood (spruce) flour | 400 g. |
| CB | 167 g. |
| Genapol | 30 g. |
| Latex | 40 g. |
| Cellulose | 100 g. |
| Red chips (flocks) | 250 g. |
| Orange paint | 50 g. |

**Type #10**

| | |
|---|---|
| Coarse wood (birch) flour | 350 g. |
| Cellulose | 100 g. |
| CB | 150 g. |
| Latex | 30 g. |
| Genapol | 20 g. |
| White chips (flocks) | 150 g. |
| Silver paint | 40 g. |
| Silver dot | 10 g. |

**Type #11**

| | |
|---|---|
| Fine wood (spruce) flour | 150 g. |
| Coarse wood (spruce) flour | 200 g. |
| Black fiber | 100 g. |
| Cellulose | 100 g. |
| Genapol | 20 g. |
| CB | 150 g. |
| Latex | 30 g. |
| Vermiculite | 36 g. |
| Black paint | 40 g. |

**Type #12**

| | |
|---|---|
| Coarse wood (spruce) flo | ur 350 g. |
| Black fiber | 100 g. |
| Cellulose | 250 g. |
| Genapol | 20 g. |
| CB | 150 g. |
| Latex | 30 g. |
| Vermiculite | 36 g. |
| Black methanite | 5 g. |

**Type #13**

| | |
|---|---|
| Coarse wood (birch) flour | 350 g. |
| White fiber | 150 g. |
| Cellulose | 200 g. |
| Genapol | 20 g. |
| CB | 150 g. |
| Latex | 30 g. |
| White paint | 40 g. |
| White mica | 60 g. |

**Type #14**

| | |
|---|---|
| Coarse wood (birch) flour | 350 g. |
| Green fiber | 100 g. |
| Cellulose | 200 g. |
| Genapol | 20 g. |
| CB | 167 g. |
| Latex | 30 g. |
| Green paint | 50 g. |
| Green mica | 100 g. |
| Green chips (flocks) | 200 g. |

**Type #15**

| | |
|---|---|
| Coarse wood (spruce) flour | 350 g. |
| Cellulose | 250 g. |
| Genapol | 20 g. |
| Latex | 40 g. |
| CB | 167 g. |
| Silica sand (coarse) brown | 200 g. |
| Gold dot | 10 g. |

As a comparison of the coating obtained from the proposed material to the coating obtained from a known material (RU 2330923) using an equal vehicle (CB), two series of tests were made. In the first series (4 tests) we have used slate (Moh's scratch hardness about 1). The next series of tests has been executed with a rubber hammer falling from a small height under action of gravity.

### Test #1

- wood flour-based without fiber
- pencil. Slate 1. 1 cm. (not sharpened)
- testing time 1 minute

On the known material coating the slate rubbed off by 0,1 mm, the coating has a visible dent and lost appearance.

On the proposed material coating (wood flour-based without fiber) the slate rubbed off by 0,2 mm, the coating has practically no dent, but a slight rupture of integrity took place.

### Test #2

- wood flour-based with fiber
- pencil. Slate 1. 1 cm. (not sharpened)
- testing time 1 minute

On the known material coating the slate rubbed off by 0,1 mm, the coating has a visible dent and lost appearance.

On the proposed material coating (wood flour-based with fiber) the slate rubbed off by 0,3 mm, the coating has practically no dent, but a slight rupture of integrity took place.

### Test #3

- wood flour-based with latex
- pencil. Slate 1. 1 cm. (not sharpened)
- testing time 1 minute

On the known material coating the slate rubbed off by 0,1 mm, the coating has a visible dent and lost appearance.

On the proposed material coating (wood flour-based with latex) the slate rubbed off by 0,3 mm, no visible fracture took place.

### Test #4

- wood flour-based with silica chips
- pencil. Slate 1. 1 cm. (not sharpened)
- testing time 1 minute

On the known material coating the slate rubbed off by 0,1 mm, the coating has a visible dent and lost appearance.

On the proposed material coating (wood flour-based with silica chips) the slate rubbed off by 0,4 mm, no visible fracture took place.

### Test #5

- wood flour-based without fiber
- hammer (weight 790 g.)
- quantity of regular knocks - 10.

On the known material coating, after regular knocks on the same place, a big indent with microdiscontinuities was formed.

On the proposed material coating (wood flour-based without fiber), after regular knocks on the same place, an impaction took place, but no discontinuities were formed.

### Test #6

- wood flour-based with fiber
- hammer (weight 790 g.)
- quantity of regular knocks - 10.

On the known material coating, after regular knocks on the same place, a big indent with microdiscontinuities was formed.

On the proposed material coating (wood flour-based with fiber), after regular knocks on the same place, an impaction took place, but no discontinuities were formed.

### Test #7

- wood flour-based with latex
- hammer (weight 790 g.)
- quantity of regular knocks - 10.

On the known material coating, after regular knocks on the same place, a big indent with microdiscontinuities was formed.

On the proposed material coating (wood flour-based with latex), after regular knocks on the same place, a slight impaction took place, but no discontinuities were formed.

### Test #8

- wood flour-based with silica chips
- hammer (weight 790 g.)
- quantity of regular knocks - 10.

On the known material coating, after regular knocks on the same place, a big indent with microdiscontinuities was formed.

On the proposed material coating (wood flour-based with silica chips), after regular knocks on the same place, a slight impaction took place, but no discontinuities were formed. The silica chips were slightly powdered.

As a comparison of the coating obtained from the proposed material to the coating obtained from a known material using an equal vehicle (mecellose), two more series of tests were made. In the first series (2 tests) we have used slate (Moh's scratch hardness about 1). The next series of tests has been executed with a rubber hammer falling from a small height under action of gravity.

### Test #9

- content sample: uncolored fiber th. 28.5 - 0.205 g.; mecellose PMC 50US 0.007 g.; white mica 0.040 g.; latex 0.040 g.; cellulose 0.630 g.; genapol 0.020 g.
- wood flour-based with silica sand
- pencil. Slate 1. 1 cm. (not sharpened)
- testing time 1 minute

On the known material coating the slate rubbed off by 0,1 mm, the coating has a visible dent and lost appearance.

On the proposed material coating (wood flour-based with silica chips) the slate rubbed off by 0.4 mm, no visible fracture took place.

### Test #10

- content sample: uncolored fiber th. 28.5 - 0.205 g.; mecellose PMC 50US 0.007 g.; white mica 0.040 g.; latex 0.040 g.; cellulose 0.630 g.; genapol 0.020 g.
- wood flour-based with fiber
- pencil. Slate 1. 1 cm. (not sharpened)
- testing time 1 minute

On the known material coating the slate rubbed off by 0.1 mm, the coating has a visible dent and lost appearance.

On the proposed material coating (wood flour-based with fiber) the slate rubbed off by 0.3 mm, the coating has practically no dent, but a slight rupture of integrity took place.

### Test #11

- content sample: uncolored fiber th. 28.5 - 0.268 g.; cellulose 0.555 g.; genapol 0.020 g.; latex 0.040 g.; mecellose 23701 0.009 g.; Amitrolit 8860 0.005 g.
- wood flour-based with fiber
- hammer (weight 790 g.)
- quantity of regular knocks - 10.

On the known material coating, after regular knocks on the same place, a big indent with microdiscontinuities was formed.

On the proposed material coating (wood flour-based with fiber), after regular knocks on the same place, a slight impaction took place, but no discontinuities were formed.

### Test #12

- content sample: uncolored fiber th. 28.5 - 0.268 g.; cellulose 0.555 g.; genapol 0.020 g.; latex 0.040 g.; mecellose 23701 0.009 g.; Amitrolit 8860 0.005 g.
- wood flour-based with silica chips
- hammer (weight 790 g.)
- quantity of regular knocks - 10.

On the known material coating, after regular knocks on the same place, a big indent with microdiscontinuities was formed.

On the proposed material coating (wood flour-based with silica chips), after regular knocks on the same place, a slight impaction took place, but no discontinuities were formed. The silica chips were slightly powdered.

It may be concluded from the tests that the overall hardness and durability of the coating made of the proposed material are higher than that of the known material and grows with increasing the quantity of additives.

## Claims

1. Material of the decorative finishing coating made as a dry mix and containing an organic filling, a water-bound vehicle and a powdered coloring matter, **characterized in that** wood flour is used as the organic filling, where the fraction of the water-bound vehicle makes 3-40% of the wood flour.

2. Material according to claim 1, **characterized in that** carboxymethylcellulose, methylcelluloses, starch, modified starch, cellulose ester can be used.

3. Material according to claim 1, **characterized in that** it also contains additional cellulose.

4. Material according to claim 1, **characterized in that** it also contains modifying additives, like, for example, polyester fiber, shredded or sliced fiber, granulated plastic foam or foam polystyrene, surface-active materials, latices or silica chips.

5. Material according to claim 1, **characterized in that** it also contains decorative additives, e.g. mica, glitters or flocks.
